# EUROPÄISCHE PATENTSCHRIFT

(11) **EP 2 000 335 B1**
(45) Veröffentlichungstag und Bekanntmachung des Hinweises auf die Patenterteilung: **05.03.2014**
(21) Anmeldenummer: 08009448.5
(22) Anmeldetag: 23.05.2008
(51) Int. Cl.: B60G 7/00

(54) **Achskomponente und Verfahren zur Herstellung einer Achskomponente**
Axle component and method of producing an axle component
Composant d'essieu et procédé pour la production d'un composant d'essieu

(30) Priorität: 06.06.2007 DE 102007026702
(43) Veröffentlichungstag der Anmeldung: 10.12.2008
(73) Patentinhaber: Benteler Automobiltechnik GmbH, 33102 Paderborn (DE)
(72) Erfinder: Schneider, Klaus, 34431 Marsberg (DE); Roxel, Andreas, 59329 Wadersloh (DE); Rackow, Volker, 33106 Paderborn (DE); Von der Kall, Jürgen, 33100 Paderborn (DE); Fortmeier, Günther, 33129 Dellbrück (DE); Bense, Dirk, 48624 Schöppingen (DE)
(74) Vertreter: Griepenstroh, Jörg

(56) Entgegenhaltungen:
- EP-A1- 1 642 754
- EP-A2- 0 479 598
- WO-A1-2007/147695
- DE-A1- 10 334 192
- DE-U1- 20 317 345
- GB-A- 728 357
- JP-A- 2 185 813
- JP-A- 8 233 009
- JP-A- 2002 316 228
- JP-A- 2006 096 305
- US-A- 3 444 947

## Beschreibung

Die Erfindung betrifft eine Achskomponente mit den Merkmalen im Oberbegriff des Patentanspruchs 1 sowie ein Verfahren zur Herstellung einer solchen Achskomponente mit den Merkmalen des Patentanspruchs 4.

Achskomponenten in Form von Zug-/Druckstäben kommen als Spurstangen, Lenker oder Koppelstäbe zum Einsatz. Spurstangen sind Teil des Lenkgestänges und dienen zur Übertragung der Lenkkräfte und -bewegungen auf die drehbar bzw. schwenkbar gelagerten Radaufnahmen einer Fahrzeugachse. Während einer Fahrbewegung des Kraftfahrzeugs werden Massekräfte über das Rad, die Radaufnahmen und die Spurstangen in das Lenksystem eines Kraftfahrzeugs eingeleitet. Hierbei kann es beispielsweise in Folge von Unwuchten am Rad zu nachteiligen Schwingungseinflüssen kommen. Aus diesem Grund erfolgt die Anbindung der Spurstangen im Lenkgestänge über Gummi-Metall-Lager.

Fahrwerkslenker haben die Funktion, das Rad kinematisch zu fixieren und haben wesentlichen Einfluss auf die Lenkeigenschaften. Fahrwerkslenker mit separat anzuschweißenden Rohrabschnitten, in welche die Gummi-Metall-Lager eingepresst werden, setzen eine Reihe von Fertigungsschritten und zusätzlichen Bauteilen voraus, so dass der Aufwand für derartige Lageraufnahmen relativ hoch ist.

Aus der EP 0 479 598 A2 ist beispielsweise ein Lenker bekannt, der in Blechbauweise aus zwei Halbschalen miteinander verbunden ist, die an ihren Randseiten miteinander verklammert sind. Es sind auch einschalige Lenker bekannt, bei welchen ein Blechprofil U-förmig umgeformt ist. D.h. das Längsprofil des Zug-/Druckstabs ist von einer einstückigen, U-förmig konfigurierten Press-Schale gebildet, deren mittlerer Steg von den beiden Lageraufnahmen durchsetzt ist und wobei die Ränder des mittleren Stegs in die gleiche Richtung abgekantet sind, so dass das U-förmige Profil entsteht. Die Endstücke der Abkantungen können dabei nochmals umgestellt sein und entweder in entgegengesetzte Richtungen oder nach außen weisen.

Aus der EP 1 642 754 A1 ist es bekannt, Achskomponente in Form eines Zug-/Druckstabs aus Aluminiumprofilen herzustellen. Das Profil soll primär ein extrudiertes Aluminiumprofil sein, was vorzugsweise auch schon U-förmig sein kann. Es ist aber auch möglich, ein Flachmaterial in die U-Form zu biegen. An den Enden sind Lageraufnahmen in einander gegenüberliegenden Wandseiten des U-förmigen Profils vorgesehen, wobei ein gegenüber den Wandseiten abgewinkelter Randsteg die Wandseiten einstückig miteinander verbindet. Ferner soll eine quer zum Randsteg gemessene Breite der Wandseiten in der Mitte zwischen den Lageraufnahmen größer als in den außermittigen Bereichen zwischen den Lageraufnahmen sein.

Eine weitere Ausführungsform einer Kopplungsstange wird in der DE 203 17 345 U1 offenbart. Dort wird vorgeschlagen, die Kopplungsstange aus einem einzigen Bauteil herzustellen, indem Schalenelemente aus Halbschalen ausgeformt werden, die an einem Ende der Kopplungsstange miteinander verbunden sind und zur Fertigstellung der Kopplungsstange entlang der Verbindungsstelle gebogen werden, so dass die identisch ausgeführten Schalenelemente aufeinander liegen und entlang ihrer Stoßkanten miteinander verschweißt werden können.

In der DE 103 34 192 A1 wird ein Lenker für eine Fahrzeug-Radaufhängung vorgeschlagen. Der Lenker soll durch mindestens einen Zieh- oder Tiefziehvorgang hergestellt werden und zeichnet sich dadurch aus, dass ein nachfolgender Biegevorgang den einschaligen Lenker so umformt, dass dieser im Wesentlichen Festigkeitswerte eines zweischaligen Lenkers aufweist. Im Unterschied zur DE 203 17 345 U1 sind die beiden Schalenelemente jedoch nicht an einem späteren Ende des Lenkers miteinander verbunden, sondern entlang einer Längsseite. Eine ähnliche Vorgehensweise ist aus der JP 02 185 813 bekannt.

Aus der GB 723 357 A ist eine Achskomponente in Form eines Zug-Druckstabes mit einem Längsprofil aus Metallblech bekannt, welches an seinen beiden Enden jeweils eine Lageraufnahme aufweist, wobei das Längsprofil eine einstückige, U-förmig konfigurierte Press-Schale ist, wobei das Längsprofil eine von den Lageraufnahmen durchsetzte erste Wandseite und eine der ersten Wandseite gegenüberliegende, von Lageraufnahmen durchsetzte zweite Wandseite aufweist. Ein gegenüber den Wandseiten abgewinkelter Randsteg verbindet die Wandseiten einstückig miteinander. Eine quer zum Randsteg gemessene Breite der Wandseiten ist in der Mitte zwischen den Lageraufnahmen größer als in den außermittigen Bereichen zwischen den Lageraufnahmen. Der Randsteg verläuft von der vertikalen Mittelachse der Lageraufnahmen bis zur vertikalen Mittelachse der anderen Lageraufnahme.

Aus der JP 8 233 009 A ist ebenfalls eine Achskomponente in Form eines Zug-Druckstabes mit einem Längsprofil aus Metallblech bekannt, welches an seinen beiden Enden jeweils eine Lageraufnahme aufweist, wobei das Längsprofil eine einstückige, U-förmig konfigurierte Pressschale ist. Das Längsprofil weist eine von den Lageraufnahmen durchsetzte erste Wandseite und eine der ersten Wandseite gegenüberliegende, von Lageraufnahmen durchsetzte zweite Wandseite auf. Ein gegenüber den Wandseiten abgewinkelter Randsteg verbindet die Wandseiten einstückig miteinander. Eine solche Achskomponente geht auch aus der JP 2006 096305 A und in alternativen Bauformen aus der JP 2002 316228 A hervor.

Ein Verfahren zur Herstellung eines im Querschnitt U-förmigen Lenkers aus Blech für eine PKW-Mehrlenkerachse ist Gegenstand der nachveröffentlichten WO 2007/147695 A1. Es wird vorgeschlagen, ein Metallblech zuzuschneiden und mittig einen Randsteg tiefzuziehen. Anschließend wird eine erste Wandseite um 90° gegenüber dem Randsteg abgewinkelt und für eine spätere Lageraufnahme gelocht. An den Lochungen werden Durchzüge hergestellt. Anschließend wird eine zweite Wandseite um 90° gegenüber dem Randsteg abgewinkelt, so dass sich die Wandseiten unmittelbar gegenüberliegen. Die zweite Wandseite wird im Bereich der späteren Lageraufnahmen gelocht. Es werden Durchzüge an den Lochungen der zweiten Wandseite hergestellt.

Der Erfindung liegt die Aufgabe zu Grunde, derartige Achskomponenten in Blechbauweise noch gewichtssparender auszubilden sowie ein Verfahren zu deren Herstellung aufzuzeigen.

Diese Aufgabe wird durch eine Achskomponente mit den Merkmalen des Patentanspruchs 1 sowie durch das beanspruchte Herstellungsverfahren nach Patentanspruch 4 gelöst.

Die erfindungsgemäße Achskomponente in Form eines Zug-/Druckstabs besitzt ein Längsprofil aus Metallblech, welches an seinen beiden Enden jeweils eine Lageraufnahme aufweist. Das Längsprofil ist eine einstückige, U-förmig konfigurierte Press-Schale. Die Press-Schale weist eine erste Wandseite auf, die von den Lageraufnahmen durchsetzt ist und eine der ersten Wandseite gegenüberliegende, ebenfalls von Lageraufnahmen durchsetzte zweite Wandseite. Die Lageraufnahmen fluchten. Die Wandseiten sind durch einen gegenüber den Wandseiten abgewinkelten Randsteg einstückig miteinander verbunden. Dadurch ergibt sich, dass die erfindungsgemäße Achskomponente zu einer Randseite, nämlich auf der dem Randsteg gegenüberliegenden Randseite, offen ist. Obwohl es sich vom Grundquerschnitt um ein U-förmig konfiguriertes Pressbauteil handelt, ist die Orientierung der U-Form um 90° gegenüber den bekannten, aus Metallblech tiefgezogenen Koppelstangen gedreht. Hierdurch ist eine Gewichtseinsparung gegenüber einem Modell, bei welchem die U-Form in Richtung der Mittelachsen der Lageraufnahmen weist, um ca. 40 % reduzierbar, bei gleichbleibendem Abstand der Lageraufnahmen zueinander.

Als Werkstoff für derartige Achskomponenten kommt vorzugsweise ein höherfester Stahl, insbesondere ein Ferrit-Bainit-Dualphasen-Stahl, zum Einsatz, welcher sich im Umformprozess stark kaltverfestigend verhält. Die Wanddicke des Metallblechs ist abhängig von den mechanischen Anforderungen an die jeweilige Achskomponente und liegt vorzugsweise in einem Bereich von 1,6 bis 2,2 mm, insbesondere in einem Bereich zwischen 1,8 und 2,0 mm.

Die Wandseiten des Längsprofils verlaufen parallel zueinander, d.h. sie haben in ihren überwiegenden Bereichen einen konstanten Abstand. Hierbei ist nicht ausgeschlossen, dass die Wandseiten bereichsweise Einprägungen oder Ausstellungen aufweisen können, wodurch die grundsätzliche Parallelität der Wandseiten jedoch nicht beeinflusst wird.

Die Orientierung der U-förmigen Press-Schale ermöglicht es, das Längsprofil in einem Bereich zwischen den Lageraufnahmen relativ schmal zu gestalten. D.h., dass eine quer zum Randsteg gemessene Breite der Wandseiten in dem Bereich zwischen den Lageraufnahmen allein aus Gewichtsgründen grundsätzlich kleiner ist als im Bereich der Lageraufnahmen. Bei der erfindungsgemäßen Achskomponente ist die Breite in der Mitte zwischen den Lageraufnahmen größer als in den außermittigen Bereichen zwischen den Lageraufnahmen. Diese Überhöhung im mittleren Bereich dient zur Einstellung einer definierten Knicksteifigkeit bei Druckbelastungen. Vorzugsweise nimmt die Breite von den außermittigen Bereichen zu den mittleren Bereichen kontinuierlich zu. Es ist lediglich die randstegseitige Längskante der Wandseiten gewölbt, während die gegenüberliegende Längskante gerade ist, d.h. im Wesentlichen parallel zur Mittelachse des Längsprofils verläuft.

Der Randsteg zwischen der ersten Wandseite und der zweiten Wandseite erstreckt sich von der vertikalen Mittelachse der ersten Lageraufnahme bis zur vertikalen Mittelachse der zweiten Lageraufnahme oder darüber hinaus. Grundsätzlich kann der Randsteg im Gegensatz zu bisher bekannten Konstruktionen auch eine Länge aufweisen, die sich über die Grenzkontur des Bauteils hinaus erstreckt. Hierdurch wird eine weitere Erhöhung der Bauteilfestigkeit möglich.

Die Lageraufnahmen dienen zur Aufnahme von Gummi-Metall-Lagern, die auf Grund der U-förmigen Konfigurierung der Press-Schale in jeweils zwei gegenüberliegenden, d.h. fluchtend angeordneten, Lageraufnahmen gehalten sind. Die Lageraufnahmen selbst sind von jeweils nach außen weisenden Durchzügen gebildet. D.h. die Durchzüge sind vom Inneren der Achskomponente nach außen ausgestellt. Vorzugsweise besitzen die Durchzüge eine fast rechtwinklige Abstellung gegenüber der jeweiligen Längswand, d.h. sie besitzen sehr enge Biegeradien. Der Innenradius liegt vorzugsweise in einem Bereich kleiner 0,4 mm und beträgt beispielsweise 0,2 mm.

Die erfindungsgemäße Achskomponente ist besonders leichtbauend und kommt vorzugsweise als Opferteil zum Einsatz, d.h. bei Überlastung des Fahrwerks bzw. der tragenden Achskomponenten soll sich beispielsweise zuerst die Spurstange verformen, um Schäden an teureren oder schwieriger zu ersetzenden Fahrwerksteilen zu vermeiden. Die Erfindung kommt daher insbesondere bei Spurstangen zum Tragen.

Ein Ausführungsbeispiel der erfindungsgemäßen Achskomponente sowie ein Verfahren zur Herstellung einer solchen Achskomponente werden nachfolgend anhand der schematischen Zeichnungen erläutert. Es zeigen:
- Figuren 1 und 2: eine Achskomponente in Form einer Spurstange in zwei unterschiedlichen perspektivischen Darstellungen;
- Figur 3: die Achskomponente der Figur 1 in einer Seitenansicht;
- Figur 4: die Achskomponenten der Figuren 1 bis 3 in einer weiteren perspektivischen Ansicht und
- Figuren 5 bis 9: die Fertigungsreihenfolge zur Herstellung einer Achskomponente in fünf Schritten.

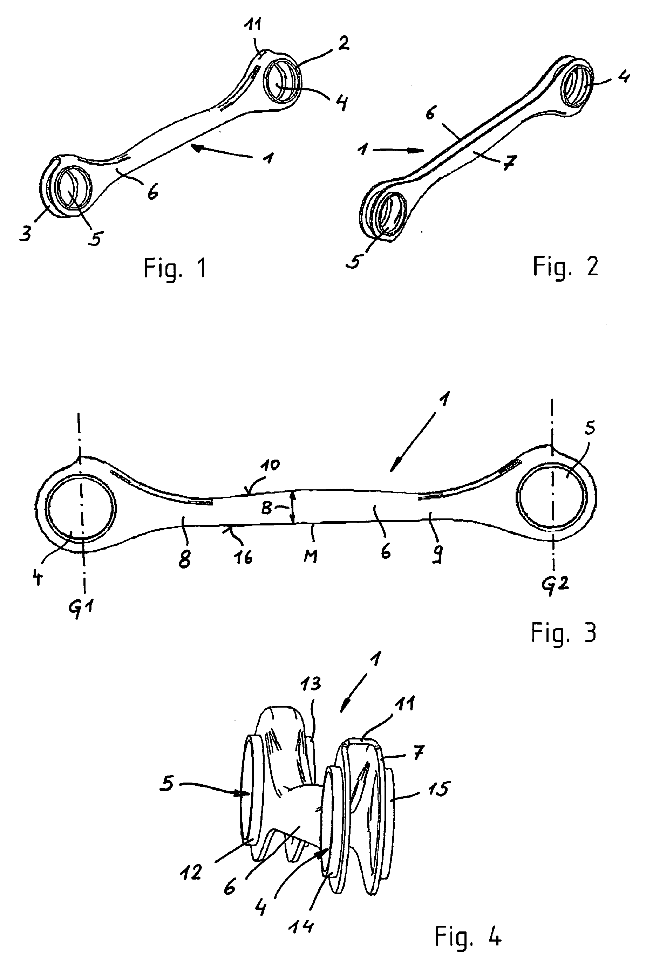

Die in den Figuren 1 bis 4 dargestellte Achskomponente 1 ist eine Spurstange, allerdings ohne Darstellung der Gummi-Metall-Lager, da es bei der Erfindung nicht auf die Gestaltung der Gummi-Metall-Lager, sondern auf die Gestaltung des tragenden Längsprofils der Achskomponente 1 ankommt. Das Längsprofil der Achskomponente 1 besteht aus umgeformtem Metallblech. Die Achskomponente ist eine einstückige, U-förmig konfigurierte Press-Schale. Einstückig bedeutet in diesem Zusammenhang, dass die Press-Schale nicht durch stoffschlüssige Verbindungstechniken, sondern ausschließlich durch Umformverfahren in die Endkontur gebracht worden ist.

Anhand der Figuren 1 und 2 ist zu erkennen, dass das Längsprofil an seinen beiden Enden 2, 3 jeweils kreisrunde Lageraufnahmen 4, 5 aufweist, in welche Gummi-Metall-Lager eingepresst werden können. Der Durchmesser der Lageraufnahmen 4, 5 ist dabei wesentlich größer als die Breite B der jeweiligen Wandseiten 6, 7.

Die Wandseiten 6, 7 verlaufen in diesem Ausführungsbeispiel über ihre gesamte Längserstreckung parallel zueinander. Die Breite B der Wandseiten 6, 7 nimmt zur Mitte M zwischen den Lageraufnahmen 4, 5 hin etwas zu und ist daher in den außermittigen Bereichen 8, 9 zwischen den Lageraufnahmen 4, 5 etwas geringer, wobei die Breite B etwa auf der Hälfte zwischen der Mitte M und der jeweiligen Lageraufnahme 4, 5 am geringsten ist. Von diesen Schmalstellen ausgehend, nimmt die Breite kontinuierlich in Richtung zur jeweiligen Lageraufnahme 4, 5 hin zu, wobei die Breite B des Längsprofils um einen Faktor ≥ 3 zunimmt.

Wie anhand der Figuren 3 und 4 zu erkennen ist, erfolgt die Breitenzunahme bei diesem Ausführungsbeispiel im Bereich zwischen den Lageraufnahmen 4, 5 ausschließlich im Bereich derjenigen Längskante 10, an welcher ein Randsteg 11 die beiden Wandseiten 6, 7 miteinander verbindet. Anhand der Figur 3 ist zu erkennen, dass sich der Randsteg 11 bis zu den in Figur 3 eingezeichneten Geraden G1 und G2 erstreckt, welche die Mittelpunkte der jeweiligen Lageraufnahmen 4, 5 schneiden. Grundsätzlich kann der Randsteg 11 im Gegensatz zu bisher bekannten Konzeptionen aber auch noch länger ausgebildet sein und sich über die vertikalen Mittelachsen der Lageraufnahmen 4 bzw. 5 erstrecken.

Der Randsteg 11 verläuft im rechten Winkel zu den Wandseiten 6, 7, wie anhand der Figur 4 zu erkennen ist. Aus Figur 4 wird auch deutlich, dass die Lageraufnahmen 4, 5 von in entgegengesetzte Richtungen weisenden und jeweils nach außen gerichteten Durchzügen 12, 13, 14, 15 gebildet sind.

Die randstegseitige Längskante 10 der Wandseiten ist gewölbt, während die gegenüberliegende Längskante 16 gerade ist (Figur 3).

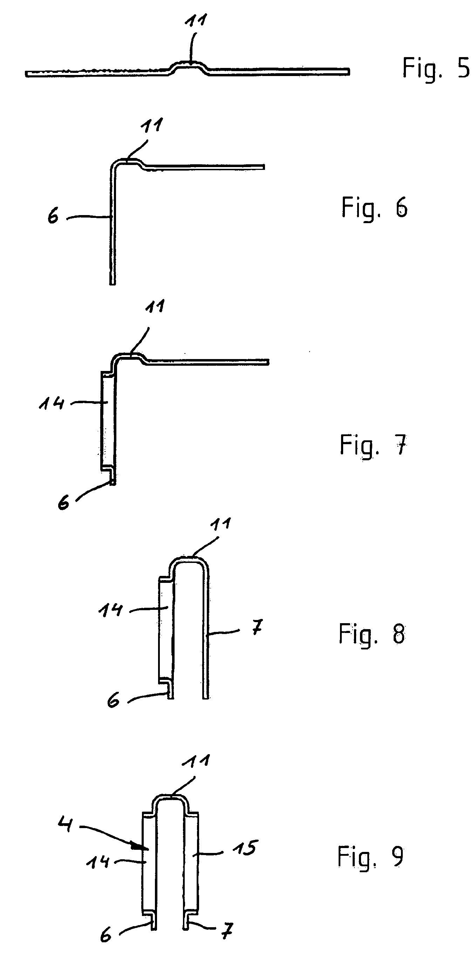

Die Herstellung einer solchen Achskomponente wird nachfolgend anhand der Figuren 5 bis 9 beschrieben.

Zur Herstellung einer vorbeschriebenen Achskomponente in Form eines Zug-/Druckstabs ist zunächst das Zuschneiden eines Metallblechs bzw. einer Metallplatine in die gewünschte Form erforderlich. Im nächsten Schritt wird durch Tiefziehen ein Randsteg 11 ausgebildet, der in Figur 5 als mittige, trapezförmige Ausstülpung zu erkennen ist. Anschließend wird eine erste Wandseite 6 um 90° gegenüber dem Randsteg 11 abgewinkelt. Es folgt ein Lochen der ersten Wandseite 6 im Bereich der späteren Lageraufnahmen (Figur 6). Anschließend werden die Durchzüge 14 an den Lochungen der ersten Wandseite 6 hergestellt (Figur 7). Im nächsten Schritt wird die zweite Wandseite 7 gegenüber dem Randsteg 11 abgewinkelt, so dass sich bereits die U-Form der Press-Schale ergibt. Die Wandseiten 6, 7 verlaufen nun parallel zueinander (Figur 8). Abschließend wird die zweite Wandseite 7 im Bereich der späteren Lageraufnahmen gelocht und es werden Durchzüge 15 an den Lochungen der zweiten Wandseite 7 hergestellt, indem entsprechende Formwerkzeuge durch die Lochungen bzw. Durchzüge 14 der ersten Wandseite 6 hindurchgeführt werden, so dass die jeweiligen Durchzüge 14, 15 in entgegengesetzte Richtungen nach außen weisen. In diesem Schritt werden gleichzeitig die zuerst erzeugten Durchzüge 14 und auch 12 kalibriert, was zu einer optimalen Koaxialität der Durchzüge 12, 14 führt.

Anschließend wird in nicht näher dargestellter Weise ein Gummi-Metall-Lager in die fluchtend angeordneten Lageraufnahmen 4, die von den jeweiligen Durchzügen 14, 15 gebildet sind, eingesetzt.

### Bezugszeichen:

- 1 -: Achskomponente
- 2 -: Ende
- 3 -: Ende
- 4 -: Lageraufnahme
- 5 -: Lageraufnahme
- 6 -: Wandseite
- 7 -: Wandseite
- 8 -: außermittiger Bereich
- 9 -: außermittiger Bereich
- 10 -: Längskante
- 11 -: Randsteg
- 12 -: Durchzug
- 13 -: Durchzug
- 14 -: Durchzug
- 15 -: Durchzug
- 16 -: Längskante

- B -: Breite
- G1 -: Gerade
- G2 -: Gerade
- M -: Mitte

## Patentansprüche

1. Achskomponente in Form eines Zug-/Druckstabs, mit einem Längsprofil aus Metallblech, welches an seinen beiden Enden (2, 3) jeweils eine Lageraufnahme (4, 5) aufweist, wobei das Längsprofil eine einstückige, U-förmig konfigurierte Press-Schale ist, wobei das Längsprofil eine von den Lageraufnahmen (4, 5) durchsetzte erste Wandseite (6) und eine der ersten Wandseite (6) gegenüberliegende, von den Lageraufnahmen (4, 5) durchsetzte zweite Wandseite (7) aufweist, wobei ein gegenüber den Wandseiten (6, 7) abgewinkelter Randsteg (11) die Wandseiten (6, 7) einstückig miteinander verbindet, wobei eine quer zum Randsteg (11) gemessene Breite (B) der Wandseiten (6, 7) in der Mitte (M) zwischen den Lageraufnahmen (4, 5) größer ist als in den außermittigen Bereichen (8, 9) zwischen den Lageraufnahmen (4, 5), wobei der Randsteg (11) mindestens von der vertikalen Mittelachse (G1) der Lageraufnahme (4) bis zur vertikalen Mittelachse (G2) der Lageraufnahme (5) verläuft, wobei die Wandseiten (6, 7) parallel zueinander verlaufen und dass die randstegseitige Längskante (10) der Wandseiten (6, 7) gewölbt ist, während die gegenüberliegende Längskante (16) gerade ist, **dadurch gekennzeichnet, dass** der Durchmesser der Lageraufnahmen (4, 5) größer ist als die Breite (B) der jeweiligen Wandseiten (6, 7) in dem Bereich zwischen den Lageraufnahmen (4, 5).

2. Achskomponente nach Anspruch 1, **dadurch gekennzeichnet, dass** die Breite (B) von den außermittigen Bereichen (8, 9) zur Mitte (M) hin kontinuierlich zunimmt.

3. Achskomponente nach einem der Ansprüche 1 bis 2, **dadurch gekennzeichnet, dass** die Lageraufnahmen (4, 5) von jeweils nach außen weisenden Durchzügen (12, 13, 14, 15) gebildet sind.

4. Verfahren zur Herstellung einer Achskomponente in Form eines Zug-/Druckstabs nach einem der Ansprüche 1 bis 3 mit folgenden Schritten:
a) Zuschneiden eines Metallblechs;
b) Tiefziehen eines mittig des Metallblechs angeordneten Randstegs (11), wobei eine randstegseitige Längskante (10) einer Wandseite (6, 7) gewölbt wird, während die gegenüberliegende Längskante (16) gerade ist, so dass eine quer zum Randsteg (11) gemessene Breite (B) der Wandseiten (6, 7) in der Mitte (M) zwischen in den Wandseiten (6, 7) herzustellenden Lageraufnahmen (4, 5) größer ist als in den außermittigen Bereichen zwischen den Lageraufnahmen (4, 5);
c) Abwinkeln einer ersten Wandseite (6) um 90° gegenüber dem Randsteg (11);
d) Lochen der ersten Wandseite (6) im Bereich von späteren Lageraufnahmen (4, 5);
e) Herstellen von Durchzügen (12, 14) an den Lochungen;
f) Abwinkeln einer zweiten Wandseite (7) um 90° gegenüber dem Randsteg, so dass sich die Wandseiten (6, 7) unmittelbar gegenüberliegen und parallel zueinander verlaufen;
g) Lochen der zweiten Wandseite (7) im Bereich von späteren Lageraufnahmen (4, 5);
h) Herstellen von Durchzügen (13, 15) an den Lochungen der zweiten Wandseite (7);
i) Einsetzen von Gummi-Metall-Lagern in die Lageraufnahmen (4, 5).

5. Verfahren nach Anspruch 4, wobei zumindest der Durchzug (12, 14) an der ersten Wandseite (6) beim Herstellen der Durchzüge (13, 15) an der zweiten Wandseite (7) kalibriert wird.

## Claims

1. Axle component in the form of a tension/compression bar, having a longitudinal profile made of sheet metal which comprises a bearing seat (4, 5) at each of its two ends (2, 3), the longitudinal profile being a one-piece compression dish of U-shaped configuration, the longitudinal profile comprising a first wall side (6) through which the bearing seats (4, 5) pass and a second wall side (7) opposite the first wall side (6), through which the bearing seats (4, 5) pass, an edge strip (11) that is bent relative to the wall sides (6, 7) integrally connecting the wall sides (6, 7) to one another, a width (B) of the wall sides (6, 7) measured at right angles to the edge strip (11) being larger in the centre (M) between the bearing seats (4, 5) than in the eccentric regions (8, 9) between the bearing seats (4, 5), the edge strip (11) extending at least from the vertical centre axis (G1) of the bearing seat (4) to the vertical centre axis (G2) of the bearing seat (5), the wall sides (6, 7) extending parallel to one another and the longitudinal edge (10) of the wall sides (6, 7) on the edge strip side being convex, whereas the opposing longitudinal edge (16) is straight, **characterised in that** the diameter of the bearing seats (4, 5) is greater than the width (B) of the respective wall sides (6, 7) in the region between the bearing seats (4, 5).

2. Axle component according to claim 1, **characterised in that** the width (B) increases continuously from the eccentric regions (8, 9) towards the centre (M).

3. Axle component according to one of claims 1 to 2, **characterised in that** the bearing seats (4, 5) are formed by outwardly facing rim holes (12, 13, 14, 15).

4. Method of producing an axle component in the form of a tension/compression bar according to one of claims 1 to 3, comprising the following steps:
a) cutting a sheet metal blank to size;
b) deep-drawing an edge strip (11) arranged in the centre of the sheet metal, a longitudinal edge (10) of one wall side (6, 7) on the edge strip side being made convex while the opposing longitudinal edge (16) is straight, so that a width (B) of the wall sides (6, 7) measured at right angles to the edge strip (11) is greater in the centre (M) between bearing seats (4, 5) that are to be produced in the wall sides (6, 7) than in the eccentric regions between the bearing seats (4, 5);
c) bending a first wall side (6) through 90° relative to the edge strip (11);
d) perforating the first wall side (6) in the region of bearing seats (4, 5) that are to be produced at a later stage;
e) producing rim holes (12, 14) at the perforations;
f) bending a second wall side (7) through 90° relative to the edge strip, so that the wall sides (6, 7) are directly opposite one another and extend parallel to one another;
g) perforating the second wall side (7) in the region of bearing seats (4, 5) that are to be produced at a later stage;
h) producing rim holes (13, 15) at the perforations in the second wall side (7);
i) inserting rubber/metal bearings in the bearing seats (4, 5).

5. Method according to claim 4, wherein at least the rim hole (12, 14) on the first wall side (6) is calibrated during the production of the rim holes (13, 15) on the second wall side (7).

## Revendications

1. Composant d'essieu sous la forme d'une barre travaillant à la traction et à la compression, ayant un profil allongé et formée d'une tôle métallique, qui présente à ses deux extrémités (2,3), respectivement, un logement de palier (4, 5), dans lequel le profil allongé est une coque formée sous pression d'une seule pièce configurée en U, dans lequel le profil allongé présente une première paroi latérale (6) traversée par les logements de paliers (4, 5) et une seconde paroi latérale (7) en regard de la première paroi latérale (6) et traversée par les logements de paliers (4, 5), dans lequel une barrette de bord (11) repliée en U par rapport aux parois latérales (6, 7) raccorde mutuellement d'une seule pièce les parois latérales (6, 7), dans lequel la largeur (B) des parois latérales (6, 7) mesurée transversalement à la barrette de bord (11) est plus grande au centre (M) entre les logements de paliers (4, 5) que dans les zones excentrées (8, 9) entre les logements de paliers (4, 5), dans lequel la barrette de bord (11) s'étend au moins de l'axe vertical au centre (G1) du logement de palier (4) à l'axe vertical au centre (G2) du logement de palier (5), dans lequel les parois latérales (6, 7) s'étendent parallèlement l'une à l'autre et l'arête longitudinale (10) côté barrette de bord des parois latérales (6, 7) est bombée, tandis que l'arête longitudinale (16) en regard est droite, **caractérisé en ce que** le diamètre des logements de paliers (4, 5) est plus grand que la largeur (B) des parois latérales respectives (6, 7) dans la zone comprise entre les logements de paliers (4, 5).

2. Composant d'essieu selon la revendication 1, **caractérisé en ce que** la largeur (B) augmente en continu des zones excentrées (8, 9) au centre (M).

3. Composant d'essieu selon l'une quelconque des revendications 1 et 2, **caractérisé en ce que** les logements de paliers (4, 5) sont formés de passages (12, 13, 14, 15) respectivement tournés respectivement vers l'extérieur.

4. Procédé de fabrication d'un composant d'essieu sous la forme d'une barre travaillant à la traction et à la compression selon l'une quelconque des revendications 1 à 3 avec les étapes suivantes consistant à :
a) découper une tôle métallique ;
b) emboutir une barrette de bord (11) aménagée au centre de la tôle métallique, dans lequel une arête longitudinale (10) côté barrette de bord d'une paroi latérale (6, 7) est bombée, tandis que l'arête longitudinale (16) en regard est droite, de sorte que la largeur (B) des parois latérales (6, 7) mesurée transversalement à la barrette de bord (11) soit plus grande au centre (M) entre les logements de paliers (4, 5) à ménager dans les parois latérales (6, 7) que dans les zones excentrées entre les logements de paliers (4, 5) ;
c) couder un premier côté de paroi (6) de 90 ° par rapport à la barrette de bord (11) ;
d) perforer la première paroi longitudinale (6) dans la zone des futurs logements de paliers (4, 5) ;
e) aménager des passages (12, 14) sur les orifices ;
f) couder une second paroi latérale (7) de 90 ° par rapport à la barrette de bord de sorte que les parois latérales (6, 7) soient directement en regard et s'étendent parallèlement l'une à l'autre ;
g) perforer la seconde paroi latérale (7) dans la zone des futurs logements de paliers (4, 5) ;
h) aménager des passages (13, 15) sur les orifices de la seconde paroi latérale (7) ; et
i) insérer des paliers de caoutchouc-métal dans les logements de paliers (4, 5).

5. Procédé selon la revendication 4, dans lequel au moins le passage (12, 14) sur la première paroi latérale (6) est calibré lors de l'aménagement des passages (13, 15) sur la seconde paroi latérale (7).
